Europäisches Patentamt

European Patent Office

Office européen des brevets

(19)

(11) Veröffentlichungsnummer: **0 036 166**
**B1**

(12) **EUROPÄISCHE PATENTSCHRIFT**

(45) Veröffentlichungstag der Patentschrift:
18.07.84

(51) Int. Cl.³: **G 21 C 1/06,** G 21 C 15/10

(21) Anmeldenummer: **81101726.8**

(22) Anmeldetag: **09.03.81**

(54) Hochtemperaturreaktor.

(30) Priorität: **12.03.80 DE 3009390**

(43) Veröffentlichungstag der Anmeldung:
**23.09.81 Patentblatt 81/38**

(45) Bekanntmachung des Hinweises auf die Patenterteilung:
**18.07.84 Patentblatt 84/29**

(84) Benannte Vertragsstaaten:
**AT BE CH DE FR GB IT LI LU NL SE**

(56) Entgegenhaltungen:
**DE - A - 1 564 186**
**DE - A - 2 342 262**
**DE - A - 2 732 774**
**DE - B - 1 281 047**
**FR - A - 1 426 264**
**FR - A - 2 238 994**
**FR - A - 2 389 970**
**US - A - 3 155 547**

(73) Patentinhaber: **GHT Gesellschaft für Hochtemperaturreaktor-Technik mbH, Friedrich-Ebert-Strasse, D-5060 Bergisch-Gladbach 1 (DE)**

(72) Erfinder: **Lohnert, Dr., Im Bungert 2, D-5060 Bergisch Gladbach 1 (DE)**
Erfinder: **Lukaszewlcz, Johannes, Dr., Dunantstrasse 24, D-5060 Bergisch Gladbach 1 (DE)**
Erfinder: **Reutler, Herbert, Dr., Weissenburgstrasse 33, D-5000 Köln (DE)**

(74) Vertreter: **Mehl, Ernst, Dipl.-Ing. et al, Postfach 22 01 76, D-8000 München 22 (DE)**

**0 036 166**

## Beschreibung

Die Erfindung geht von einem gasgekühlten Hochtemperaturreaktor nach dem Oberbegriff des ersten Anspruchs aus. Ein solcher Reaktor ist aus DE-A-2 719 613 bekannt.

Dieser Reaktor soll als Leistungsreaktor entweder zur Stromerzeugung beispielsweise über einen Dampfprozeß oder zur nuklearen Kohlevergasung dienen. Leistungsreaktoren dieser Art sind in Deutschland der AVR und der THTR, beschrieben in der deutschen Zeitschrift Atomwirtschaft vom Mai 1966 und vom Mai 1971 in mehreren ausführlichen Aufsätzen. In den USA sei als Beispiel der Reaktor Fort Saint Vrain genannt, der ebenfalls in mehreren Veröffentlichungen beschrieben wurde.

Wesentliches Problem eines Kernreaktors ist der sichere Einschluß allen radioaktiven Inventars und, damit untrennbar verbunden, die zuverlässige Abfuhr der sogenannten Nachzerfallswärme, d. h. der Wärme, die auch bei abgeschaltetem Reaktor auf kernphysikalische Weise für längere Zeit neu entsteht. Diese Nachzerfallswärme, auch kurz Nachwärme genannt, beträgt bei den genannten Leistungsreaktoren unmittelbar nach längerem Leistungsbetrieb etwa 3% der thermischen Nennleistung und wird erst längere Zeit nach dem Abschalten des Reaktors wesentlich kleiner. Bei gasgekühlten Leistungsreaktoren, die aus wirtschaftlichen Gründen mit einem hohen Gasdruck von beispielsweise 40 bis 60 bar betrieben werden, besteht das besondere Problem darin, daß die Nachwärme auch bei drucklosem Reaktor sicher abgeführt werden muß. Als drucklos in diesem Sinn betrachtet die Inhaberin einen mit Helium gekühlten Leistungsreaktor nicht nur dann, wenn der Gasdruck im Reaktorkern bis auf den Umgebungsdruck von etwa 1 bar abgesenkt ist, sondern auch, wenn im Störfall der Gasdruck statt 50 nur noch 10 bar beträgt. Bei diesem geringen Druck wird nicht nur der Wärmetransport zu den üblichen Leistungs- oder Notwärmetauschern verringert, sondern auch die Naturkonvektion im Kern wesentlich verschlechtert. Daher wurden bei den bisherigen Leistungsreaktoren mehrere redundante Kühlkreise vorgesehen, die mit Gebläsen und Wärmetauschern die Nachwärme aus dem Kern abführen sollten. In einigen Entwürfen wurde zusätzlich angestrebt, die sich bei Ausfall aller Geläse einstellende Naturkonvektion zwischen Kern und Wärmetauschern zur Nachwärmeabfuhr auszunutzen. Berechnungen haben aber gezeigt, daß bei drucklosem Reaktor diese Nachwärmeabfuhr nicht ausreicht. Wenn man sogar davon ausgeht, daß auch das Sekundärsystem ausfallen kann, dann führt diese Naturkonvektion aufgrund der ansteigenden Gastemperaturen zur Zerstörung metallischer Einbauten im Primär- und Sekundärsystem. Außerdem besteht bei einem Gasumlauf vom Wärmetauscher zum Kern die erhöhte Wahrscheinlichkeit, daß entweder Wasserdampf oder Luft in den Kern transportiert wird. Beides soll wegen der Oxydation der Graphitteile auf jeden Fall vermieden werden. Außerdem verändert Wasserdampf die Moderation und erhöht die Reaktivität des Reaktors.

In dem deutschen Patent DE-C-2 160 507.2 wird eine Einrichtung zum Kühlen der Bauelemente eines gasgekühlten Reaktorkerns und zum Abkühlen der nach dem Abschalten eines Kernreaktors auftretenden Nachzerfallswärme beschrieben, durch die unabhängig von der Art einer etwa im Reaktorkühlgaskreislauf auftretende Störung die Kühlung der Bauelemente und auch die Abführung der Nachzerfallswärme sichergestellt sein soll. Mit besonderen Gebläsen, die bei Leistungsbetrieb abgeschaltet sind, und mit Klappen, die bei Leistungsbetrieb geschlossen sind, soll die Nachwärme aus dem Core an besondere Rippenkühler abgegeben werden. Bei Ausfall der Gebläse sollen die ersten Klappen geschlossen und die zweiten Klappen geöffnet werden, die Strömungsrichtung soll sich umkehren und die Nachwärme im Naturumlauf vom Kern an den Rippenkühler abgegeben werden. Diese Nachwärmeabfuhr ist also von aktiven Maßnahmen im Primärkreis abhängig, bei Ausfall der Gebläse werden metallische Teile oberhalb des Kerns durch hohe Temperaturen gefährdet, bei drucklosem Reaktor ist die Wärmeabfuhr durch Naturkonvektion nicht ausreichend, und bei einem Lufteinbruch wird durch die Naturkonvektion Luft in den Kern hinein transportiert.

In der deutschen Offenlegungsschrift DE-A-2 623 978.1 hat die Anmelderin einen Hochtemperaturreaktor beschrieben, bei dem die Nachwärme durch den Deckenreflektor abgeführt werden soll. Dort sind auch die der vorliegenden Erfindung zugrunde liegenden Probleme bereits dargestellt. Diese Deckenkühlung ist zwar auch im Naturumlauf funktionsfähig und kann durch ständigen Betrieb dieser Naturumlaufkühlung unabhängig von aktiven Maßnahmen betrieben werden. Diese Deckenkonstruktion ist aber von metallischen Bauteilen abhängig, die einerseits das Kühlmittel führen und andererseits die aus zahlreichen Graphitblöcken bestehende Decke tragen. Berechnungen haben aber gezeigt, daß die Deckenreflektorkühlung allein zur Nachwärmeabfuhr bei vertretbaren Temperaturen der Brennelemente nicht ausreicht, wenn der Betriebsdruck unter ca. 10 bar absinkt.

Bei einem Kugelhaufenreaktor könnte der Deckenreflektor sogar, wenn seine metallischen Halterungen versagen, auf die Kugelschüttung herabfallen und dadurch einen erheblichen Anstieg der Reaktivität verursachen.

Aufgabe der vorliegenden Erfindung ist es, einen gasgekühlten Hochtemperaturreaktor zu schaffen, bei dem die Nachwärme auch bei drucklosem Reaktor allein mit passiven Maßnahmen im Primärkreis abführbar ist und bei dem der Deckenreflektor nicht an metallischen Bauteilen aufgehängt ist.

Zur Lösung dieser Aufgabe wird ein Reaktor nach dem ersten Anspruch vorgeschlagen. Wenn man, wie vorgeschlagen, die Seitenwand des Reflektors in wärmeübertragender Weise mit einem passiven Wärmeabfuhrsystem verbindet und außerdem im Deckenreflektor auf tragende metallische Bauteile verzichtet, erhält man einen Reaktor, der von jeder aktiven Maßnahme im Primärkreis unabhängig ist.

Für die Bemessung der einzelnen Bauteile dieses Reaktors gibt es naturgemäß mehrere Alternativen, die im folgenden beschrieben werden. Die hier interessierenden physikalischen Kennwerte, die Wärmedurchgangszahlen, Wärmeleitfähigkeit und Wärmekapazität der bei Hochtemperaturreaktoren verwendbaren Baustoffe wie Graphit und Kohlestein, sind dem Fachmann bekannt. Von wesentlicher Bedeutung ist, daß die Wärmeabfuhr vom Kern bis zum Wärmeabfuhrsystem nicht zu groß ist, weil dadurch das Wärmeabfuhrsystem gefährdet wäre, und auch nicht zu klein ist, weil dadurch die Temperaturen im Kern zu hoch ansteigen würden. Die Nachwärme soll zunächst in den Brennelementen und dem Reflektor gespeichert und dann durch die Isolierung begrenzt an das Wärmeabfuhrsystem abgegeben werden. Während man bisher bei Leistungsreaktoren bemüht war, den Kern möglichst gut zu isolieren, damit die Wärmeverluste im Leistungsbetrieb gering bleiben, wird bei der vorliegenden Erfindung auch im Leistungsbetrieb ständig eine begrenzte Wärmemenge an das Nachwärmeabfuhrsystem abgegeben. Dieser scheinbare Nachteil der vorliegenden Erfindung wird aber ausgeglichen durch den Vorteil, daß die bisher notwendigen aktiven Wärmeabfuhrsysteme aus mehreren redundanten Kühlkreisen mit Gebläsen und Wärmetauschern entfallen können. Diese Notkühlkreise, die ständig von einem Gasstrom durchströmt wurden, hatten erhebliche Flächen, die zwangsläufig Wärmeverluste verursachten.

Die Nachwärme aus dem Kern soll bei Ausfall aller aktiven Systeme ausschließlich durch Wärmeleitung, Wärmestrahlung und kerninterne Konvektion abgeführt werden. Der aus Reflektor und dessen Isolierung bestehende Kernbehälter kann z. B. von einer wassergekühlten Stahlhülle umgeben sein, von der die Nachwärme allein durch Naturkonvektion an die Umgebung außerhalb des Primärkreises abgeführt werden kann. Sollte auch diese Wasserkühlung versagen, kann die Nachwärme über ein Liner-Kühlsystem nach außen abgegeben werden.

Durch ständige Kühlung des Seitenreflektors im Leistungsbetrieb wird dessen Wärmekapazität im Schadensfall erhöht, ohne sein Volumen zu vergrößern. Ein gekühlter Reflektor kann im Schadensfall mehr Wärme aufnehmen als ein Reflektor, dessen Temperatur im Leistungsbetrieb bereits der Kerntemperatur entspricht.

Die im zweiten Anspruch angegebenen Daten geben dem Reaktorfachmann Hinweise für die Auslegung eines erfindungsgemäßen Reaktors. Dabei werden die heute üblichen Reaktorbaustoffe und die heute als zulässig betrachteten Materialkennwerte und Temperaturen zugrunde gelegt. Wenn es gelingt, bessere Materialien zu finden oder die zulässig erscheinenden Temperaturen zu erhöhen, kann der Fachmann im Rahmen der vorliegenden Erfindung die angegebenen Werte nach den Regeln der Technik erhöhen. Die Angaben beziehen sich auf einen Kugelhaufenreaktor mit den üblichen Brennelementen von 60 mm Durchmesser, weil diese Werte der Berechnung zugrunde gelegt wurden. Die vorgeschlagenen Daten ergeben einen Reaktor, der bei im übrigen konservativer Auslegung nur eine thermische Leistung von ca. 100—200 MW aufweist. Dies ist ein wesentlicher Unterschied zu den bisher geplanten großen Leistungsreaktoren, bei denen im Rahmen technologischer Grenzen ein vor allem bezüglich der Brennstoffzykluskosten optimaler Kern gesucht wurde. Dabei ergaben sich hohe mittlere Leistungsdichten, hohe Abbrände, große Leistungseinheiten, kleine Temperaturkoeffizienten und ein kleines Moderationsverhältnis. Für einen derartigen Kern sind aufwendige Regel- und Instrumentierungssysteme, redundante und diversitäre Abschalteinrichtungen und Nachwärmeabfuhr-Kühlketten notwendig, die erhebliche Kosten verursachen und damit die Vorteile eines bezüglich der Brennstoffzykluskosten optimalen Kerns aufzehren. Die bisher geplanten großen Leistungen ergeben sich bei dem erfindungsgemäßen Reaktor durch Aufstellung mehrerer parallelgeschalteter Einheiten. Die Vorteile bei der Fertigung von Reaktorbauteilen in Serien sowie die Erhöhung der Verfügbarkeit der großen Anlage bieten einen Ausgleich für die Nachteile bei den Brennstoffzykluskosten.

Beim erfindungsgemäßen Reaktor werden Reaktivitätsstörfälle z. B. durch Wassereinbruch durch das hohe Moderationsverhältnis (Anzahl der Graphitatome zu Anzahl der Brennstoffatome) begrenzt. Dadurch sind die Anforderungen an die Abschaltstäbe geringer. Bei Leistungsbetrieb kann der vorgeschlagene Reaktor mit Hilfe des negativen Temperaturkoeffizienten der Reaktivität, also durch Veränderung der Gebläseleistung geregelt werden.

Die nur im Reflektor angeordneten Steuerstäbe unterscheiden den erfindungsgemäßen Reaktor in signifikanter Weise von den bisher geplanten großen Kugelhaufenreaktoren, die aufgrund ihres großen Durchmessers nur mit zahlreichen, unmittelbar in die Schüttung einfahrenden Steuerstäben beherrscht werden konnten. Die stattdessen vorgesehenen und in bekannter Weise im Seitenreflektor verfahrbaren Steuerstäbe dienen im wesentlichen zur Abschaltung des Reaktors in den kalt unterkritischen Zustand.

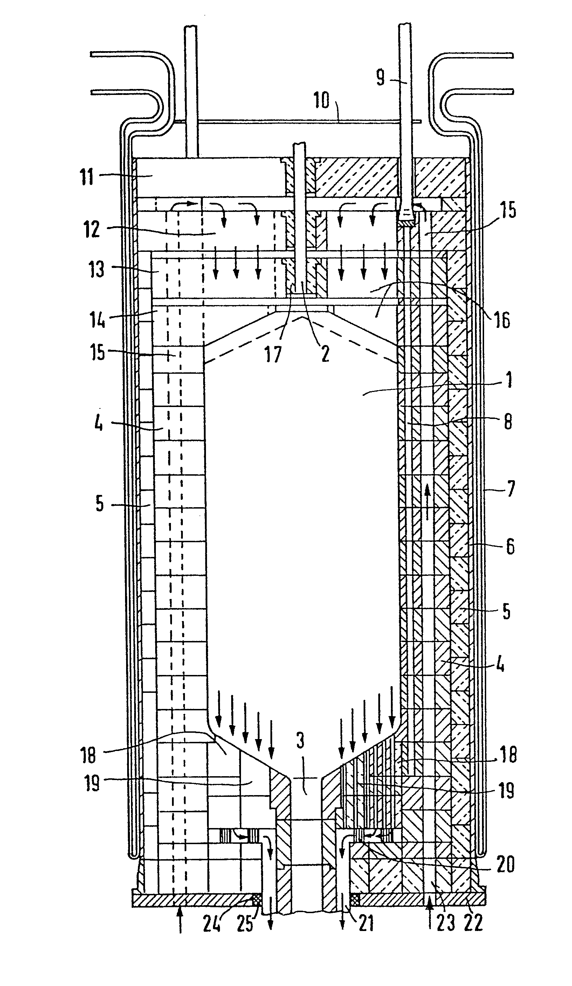

Die Figur zeigt einen senkrechten Längsschnitt durch einen erfindungsgemäßen gasgekühlten Hochtemperaturreaktor, dessen zylindrischer Kern 1 aus einer Schüttung von zahlreichen, nicht dargestellten kugelförmigen Brennelementen besteht, die durch ein Beschickungsrohr 2 in den Kern eintreten und durch ein Abzugsrohr 3 den Kern wieder verlassen. Der Kern 1 ist umgeben zunächst von zahlreichen Graphitreflektorblöcken 4, die einen kreisringsektorförmigen oder auch trapezförmigen Querschnitt haben und außen von einer Schicht von gestapelten Kohlesteinblöcken 5 umgeben sind, die ebenfalls einen kreisringsektorförmigen Querschnitt haben und durch einen Stahlmantel 6 zusammengehalten werden. Der Stahlmantel 6 wird durch zahlreiche senkrechte, gleichmäßig über seinen Umfang verteilte U-Rohre 7 gekühlt, in deren beiden Schenkeln aufgrund unterschiedlicher Tempera-

3

turen zwangsläufig ein Naturumlauf entsteht, der das Kühlwasser zu einem außerhalb des Primärsystem- angeordneten und nicht näher dargestellten Wärmetauscher führt. Der warme Schenkel dieser U-Rohre ist mit dem Stahlmantel 6 leitend verbunden, um die Nachwärme aus dem Reaktorkern zu übernehmen. Die Graphitblöcke 4 des Seitenreflektors enthalten in der Nähe des Kerns mehrere gleichmäßig über den Umfang verteilte senkrechte Kanäle 8 zur Aufnahme von nicht dargestellten Steuerstäben, die durch Führungsrohre 9 von oben in den Reflektor eingefahren werden können. Diese Führungsrohre werden durch ein Ringblech 10 gegeneinander distanziert. Die Decke des Reaktors besteht ähnlich wie beim AVR aus mehreren, übereinander angeordneten Schichten von Graphit- bzw. Kohlesteinblöcken, die einen sektorförmigen Querschnitt haben und von den Graphitblöcken 4 und den Kohlesteinblöcken 5 der Seitenwand getragen werden. Die obersten Blöcke 11 der Reaktordecke bestehen aus Kohlestein und sind mit Ausnahme der für die Absorberstabführungen 9 vorgesehenen Bohrungen geschlossen. Die darunter liegenden Blöcke 12, 13 und 14 aus Graphit haben nicht nur die auch in den Reflektorblöcken 4 bereits vorgesehenen Bohrungen 15 und Kanäle 8 zur Aufnahme von Steuerstäben sondern auch mehrere radiale Schlitze 16, durch die das Kühlgas in den Reaktor 1 eintritt. Jeweils in der Längsachse des Reaktors tragen die Blöcke 11, 12 und 13 ein Drehteil 17 aus Graphit, in dem das Beschickungsrohr 2 geführt ist. Im Boden des Reaktors wird das Abzugsrohr 3 von mehreren Bodenblöcken 18 und 19 umgeben, die einen trichterförmigen Boden bilden und zahlreiche senkrechte Bohrungen aufweisen, durch die das erhitzte Kühlmedium durch einen von Säulen 20 getragenen Zwischenraum und durch einen das Abzugsrohr 3 umgebenden Ringraum 21 nach unten abfließt. Der Reaktorbehälter wird getragen von einer Grundplatte 22, die mehrere über den Umfang gleichmäßig verteilte Bohrungen 23 und eine zentrale Öffnung 24 aufweist, die gegenüber dem austretenden heißen Gas mit einer nicht näher beschriebenen Isolierung 25 geschützt ist.

Das bei 23 eintretende Gas fließt durch die Bohrungen 15 senkrecht nach oben, dann durch einen Zwischenraum zwischen den Blöcken 11 und 12 und durch die Schlitze 16 abwärts durch die Blöcke 12, 13 und 14 in den Kern 1. Dabei werden im Normalbetrieb Seiten- und Deckenreflektor gekühlt. Beim normalen Abschalten dieses Reaktors werden zunächst die Stäbe eingefahren und die Gebläseleistung gedrosselt, dabei steigt die Temperatur im Kern und der Reaktor wird sowohl aufgrund seines hohen negativen Temperaturkoeffizienten der Reaktivität als auch aufgrund der eingefahrenen Stäbe unterkritisch. Danach wird der Reaktor mit geringer Gebläseleistung bis in den kalt unterkritischen Zustand abgekühlt. Bei Ausfall der Gebläse geht der Reaktor auch ohne Stäbe aufgrund der ansteigenden Temperatur von selbst in den heiß unterkritischen Zustand über. Dabei verteilt sich die in den Brennelementen gespeicherte Wärme und die in den Brennelementen neu entstehende Nachwärme auf Kern und Reflektor, der anschließend die Wärme durch die Isolierung aus Kohlsteinblöcken 5 begrenzt an die U-Rohre 6 abgibt. Solange der Betriebsdruck im Primärkreis von beispielsweise 50 bar erhalten bleibt, wird der Wärmeaustausch im Kern unterstützt durch interne Konvektion. Bei Druckabfall, also etwa unter 10 bar, ist die Konvektion nicht mehr von wesentlicher Bedeutung, so daß die gesamte Wärme durch Leitung und Strahlung vom Kern über Reflektor und Isolierung an die U-Rohre 7 abgegeben werden muß und kann.

Die folgende Tabelle enthält die Hauptauslegungsdaten eines erfindungsgemäßen Reaktors.

| | |
|---|---|
| Thermische Leistung, MW | 125 |
| Höhe des Kerns, m | 6,0 |
| Durchmesser des Kerns, m | 3,0 |
| Mittlere Leistungsdichte des Kerns, MW/m$^3$ | 2,94 |
| Reflektordicke, m | 0,75 |
| Einzonencore | |
| OTTO-Beschickung | |
| Zyklusart | Uran/Plutonium |
| Schwermetallbeladung Brennelement, g | 7 |
| Abbrand, GWd/t | 40 |
| Mittlere Austrittstemperatur, °C | 750 |
| Mittlere Eintrittstemperatur, °C | 250 |
| Anzahl Reflektorstäbe | 20 |
| Dicke Reflektorstäbe, cm | 8 |
| Reaktivitätswerte: | |
| Temperatureffekt (20°C—750°C), % | 6 |
| Xenoneffekt, % | 3 |
| Maximaler Wassereinbruch, % | 1 |
| Wirksamkeit Reflektorstäbe, % | 12 |
| Wirksamkeit eines Reflektorstabes, % | 0,5 |
| Anfangsanreicherung, % | 5 |
| Temperaturkoeffizient: | |
| Gleichgewichtscore, $\Delta$ k/°C | $-7 \cdot 10^{-5}$ |
| Xenonfreies Core, $\Delta$ k/°C | $-10 \cdot 10^{-5}$ |
| Brennelementverweilzeit, d | 500 |

4

| | |
|---|---|
| Konversionsrate | 0,4 |
| Radialer Temperaturunterschied, K | 120 |
| Maximale BE-Temperatur im Gleichgewichtscore, °C | 850 |
| Maximale BE-Temperatur nach Abschaltung: | |
| Reaktor unter Druck, °C | 1200 |
| Druckverluststörfall, °C | 1400 |
| Dicke der Kohlesteinisolierung, m | 0,25 |

**Patentansprüche**

1. Gasgekühlter Hochtemperaturreaktor mit einem Reaktorkern (1) in einem zylindrischen Kernbehälter; der Kern ist von einem Graphitreflektor (4) umgeben; die Seitenwand des Reflektors ist von einer Isolierung (5, 6) und einem Wärmeabfuhrsystem umgeben, dadurch gekennzeichnet, daß Kerngeometrie, Leistungsdichte, Reflektor (4), dessen Isolierung (5), Wärmekapazität und Wärmeabfuhrsystem (5, 6, 7) so bemessen und gestaltet sind, daß die Nachwärme aus dem Kern (1) bei drucklosem Reaktor allein mit passiven Maßnahmen, d. h. ohne Gebläse, Pumpen oder Betätigung von Klappen bzw. Armaturen durch den Stahlmantel (6) hindurch abführbar ist und daß der Deckenreflektor ohne metallische Aufhängung ausgeführt ist.

2. Kugelhaufenreaktor nach Anspruch 1 mit folgenden zusätzlichen Merkmalen:

a) Die Wärmeübertragung bei Nachwärmeabfuhr vom Reaktorkern durch Reflektor und Isolierung bis zum Wärmeabfuhrsystem beträgt bei einer maximalen Brennelementtemperatur von 1400°C und drucklosem Reaktor etwa 3 bis 6 kW/m² der zylindrischen Außenwand des Kernbehälters,

b) der Reaktor hat eine Leistung von etwa 20 MW/m Kernhöhe,

c) der Reaktorkern hat einen Durchmesser von etwa 3 m,

d) der Kern hat eine mittlere Leistungsdichte von etwa 3 MW/m³ und eine maximale örtliche Leistungsdichte von etwa 4 MW/m³ Kernvolumen.

**Claims**

1. A gas-cooled high-temperature reactor comprising a reactor core (1) in a cylindrical core container; the core is surrounded by a graphite reflector (4); the side wall of the reflector is surrounded by an insulation (5, 6) and a heat dissipation system; characterized in that core geometry, power density, reflector (4), the insulation (5) thereof, heat capacity and heat dissipation system (3, 6, 7) are so dimensioned and formed that, for an unpressurized reactor, the residual heat from the core (1) can be dissipated through the steel casing (5) by means of passive measures only, i. e. without blowers, pumps or the operation of flaps or armatures; and that the overhead reflector is erected without a metallic suspension.

2. A pebble-bed reactor according to claim 1 having the following additional features:

a) in the case of residual heat dissipation, the heat transfer from the reactor core through the reflector and insulation to the heat dissipation system is approximately 3 to 6 kW/m² to the cylindrical external wall of the core container at a maximum fuel element temperature of 1400°C and with an unpressurized reactor;

b) the reactor has a power of approximately 20 MW/m of core height,

c) the reactor core has a diameter of approximately 3 m,

d) the core has an average power density of approximately 3 MW/m³ and a maximum local power density of approximately 4 MW/m³ of the core volume.

**Revendications**

1. Réacteur à haute température, refroidi par du gaz, comprenant un coeur de réacteur (1) dans un caisson cylindrique pour le réacteur; le coeur est entouré d'un réflecteur (4) en graphite; la paroi latérale du réflecteur est entourée d'une isolation (5, 6) et d'un système d'évacuation de la chaleur, caractérisé en ce que la géometrie du coeur, la densité de puissance, le réflecteur (4), son isolation (5), la capacité calorifique et le système d'évacuation de la chaleur (5, 6, 7) sont dimensionnés et conformés de manière à ce que la chaleur résiduelle du réacteur (1) puisse être évacuée, lorsque le réacteur n'est pas sous pression, seulement par des mesures passives, c'est-à-dire sans ventilateur ni pompe ou manoeuvre de volets et de robinets, à travers l'enveloppe latérale en acier (6) et en ce que le réflecteur de couvercle est exécuté sans suspension métallique.

2. Réacteur à lit de boulets suivant la revendication 1 ayant les caractéristiques supplémentaires suivantes:

a) le transfert de chaleur, dans le cas d l'évacuation de la chaleur résiduelle, du coeur du réacteur jusqu'au système d'évacuation de la chaleur à travers le réflecteur et l'isolation est compris, pour une température maximale de l'élément combustible de 1400°C et quand le réacteur n'est pas sous pression, entre environ 3 et 6 kW/m$^2$ de la paroi extérieure cylindrique du caisson pour le coeur,

b) le réacteur a une puissance d'environ 20 MW/m de hauteur du coeur,

c) le coeur du réacteur a un diamètre de 3 m environ,

d) le coeur a une densité de puissance moyenne d'environ 3 MW/m$^3$ et une densité de puissance locale maximale d'environ 4 MW/m$^3$ de volume de coeur.